# EUROPÄISCHE PATENTSCHRIFT

(11) **EP 0 512 272 B1**
(45) Veröffentlichungstag und Bekanntmachung des Hinweises auf die Patenterteilung: **09.08.1995**
(21) Anmeldenummer: 92106047.1
(22) Anmeldetag: 08.04.1992
(51) Int. Cl.: A01G 9/10

(54) **Pflanzenträger**
Plant carrier
Support de plantes

(30) Priorität: 02.05.1991 DE 4114294
(43) Veröffentlichungstag der Anmeldung: 11.11.1992
(73) Patentinhaber: BLUMENERDENWERK STENDER, D-46514 Schermbeck (DE); MST- DRÄNBEDARF GmbH, D-27239 Twistringen (DE)
(72) Erfinder: Stender, Hans, W-4235 Schermbeck (DE); Hengstermann, Heinrich-Gerhard, W-4280 Borken 4 (DE); Stöver, Hermann, W-2832 Twistringen (DE); Meyer, Alfons, W-2832 Twistringen (DE)
(74) Vertreter: Bischof, Hans-Jochen, Dipl.-Ing.

(56) Entgegenhaltungen:
- AT-B- 332 674
- AT-B- 359 762
- DE-A- 3 400 696
- DE-U- 8 911 056
- FR-A- 2 584 891
- JP-A- 5 542 955
- US-A- 3 172 234

## Beschreibung

Die Erfindung bezieht sich auf einen Pflanzenträger zum Ziehen und Kultivieren von Pflanzen, Stecklingen und Samen, insbesondere auf Pflanztischen, im Gartenbau, in Balkon und Blumenkästen, gebildet aus einzelnen Schichten, von denen die äußere Schicht eine mit einem, für das Wachstum der Pflanzen geignetem, Pflanzsubstrat gefüllte Hülle ist, und die mittlere Schicht aus Pflanzsubstrat besteht.

Es ist bekannt, Pflanzen in Pflanzkästen zu ziehen, wobei die Pflanzkästen häufig aus Kunststoff bestehen, vornehmlich aus Kunststoffkästen, die sich aus einzelnen topfförmigen Gebilden zusammensetzen. Die Entsorgung solcher Kästen bereitet Schwierigkeiten. Die Topfform hat auch noch andere Nachteile, nämlich die Bewässerung muß konstant sein, da sonst die Wurzel leicht im Wasser steht und damit die Pflanze zu Krankheiten neigt.

Es ist ferner bekannt, Torf fein zu mahlen und in Strangform zu pressen und mit einem Kunststoffnetz zu um hüllen. Das Kunststoffnetz ist dabei so ausgebildet, daß es sich elastisch verformt. Ein solcher Strang wird dann in passende Größen geschnitten und dient zum Setzen von Stecklingen oder Samen. Wird der gepreßte Strang bewässert, quillt er aus, wobei das umgehende Kunststoffnetz mit auseinandergeht. Der feingemahlene Torf hat jedoch ein sehr geringes Porenvolumen, was sich auf das Wachstum der Pflanzen auswirkt, und ferner kommt hinzu, daß eine schiechte Kapillarwirkung vorhanden ist, was eine schiechte Wiederbenetzbarkeit zur Folge hat.

Es sind auch Begrünungsmatten bekannt, die zur Dachbegrünung herangezogen werden bzw. die als Böschungsmatten benutzt werden. Bei den Böschungsmatten besteht die Aufgabe darin, dafür zu sorgen, daß die Pflanze schnell durch die Matte durchwurzelt und sich mit dem darunterliegenden Boden verbindet, so daß eine möglichst schnelle Befestigung des Bodens erreicht wird.

Die Dachbegrünung dagegen wird zum Teil aus Matten aufgebaut, in denen die Nährstoffe für den Grassamen enthalten sind. Der Aufbau solcher Matten muß jedoch derart erfolgen, daß das Dach, auf dem die Matte aufliegt, weitestgehend von der Feuchtigkeit ferngehalten wird, das heißt die Matte besteht in der Regel aus einer Kunststoffschicht, auf die dann Schichten aus Nährstoffen für das Wachstum bestimmter Grassorten gefügt sind. Diese Matten sind nur für den ganz bestimmten Zweck, nämlich der Dachbegrünung, geeignet und lassen sich anderweitig nicht verwenden.

Es ist ferner aus der US-A-3172234 Patentschrift ein Pflanzenträger bekannt, der zum Ziehen und Kultivieren von Pflanzen, Stecklingen und Samen aus einzelnen Schichten gebildet ist, von dem die äußere Schicht eine Hülle ist, die mit einem für das Wachstum der Pflanzen geeigneten Pflanzsubstrat gefüllt ist, so daß die mittlere Schicht aus dem Pflanzsubstrat besteht. Dieser Pflanzenträger ist insbesondere für Pflanztische im Gartenbau, sowie für Balkon- und Blumenkästen geeignet.

Es ist Aufgabe der Erfindung, einen Pflanzenträger zu schaffen, der an beliebigen Orten einsetzbar ist, der voll verrottbar ist und der alle Nährstoffe für das Wachstum der Pflanzen enthält, und der aus einem allseitig geschlossenen Körper besteht.

Erfindungsgemäß geschieht das durch die in den Ansprüchen enthaltenen Merkmale.

Der Grundgedanke, der der Erfindung zugrunde liegt, besteht darin, eine Pflanzplatte zu bilden, die voll verrottbar ist, so daß jegliche Entsorgung entfällt. Ferner soll eine Platte angeboten werden, die handelsüblichen Abmessungen entspricht, um vom Verbraucher erworben und mitgeführt werden zu können.

Der Aufbau der Platte ist dementsprechend nur aus Naturfasern und Pflanzensubstrat. Um die Platte zusammenzuhalten, wird ein Naturfasergeflecht verwendet, das beispielsweise sackähnlich ausgeführt sein kann, aber auch aus in sich verflochtener Naturfaser bestehen kann. Es werden immer mehrere Schichten übereinander angeordnet. In der einfachsten Aufbauweise bietet sich eine Platte an, die aus einer Schicht Naturfasergeflecht, einer Schicht Pflanzensubstrat und einer Schicht Naturfasergeflecht besteht. Die Dicke der Platte bestimmt sich aus dem Pflanzensubstrat und den darin enthaltenen Nährstoffen einerseits und andererseits aus der Art der Pflanze und wie stark ihre Wurzelbildung ist. Damit bietet sich auch eine mehrschichtige Platte an, die aus einem Naturfasergeflecht, einer Schicht Kokosfaser, einer Schicht Pflanzensubstrat und einem Naturfasergeflecht besteht. In eine solche Platte eingebrachte Pflanzen werden zunächst im Pflanzensubstrat ihre Wurzelbildung vollziehen, wobei das Planzensubstrat immer feucht gehalten werden muß, und werden dann in die darunterliegende Kokosschicht eindringen und dort ihre Wurzelbildung weiter entfalten.

Die Platten lassen sich leicht feucht halten, zuviel Wasser fließt ab, womit verhindert wird, daß die Pflanzenwurzeln infolge zu hoher Feuchtigkeit zu Krankheiten neigen können. Entscheidend ist, daß durch die Naturfasern (Kokosfaser) eine bessere Kapillarität gewährleiset ist. Jederzeit können Nährstoffe zusätzlich zugegeben werden, so daß das Pflanzensubstrat, gegebenenfalls zusammen mit der darunterliegenden Faserschicht, wie beispielsweise Kokos, immer ein gutes Medium für das Wachstum der Pflanzen bildet.

Das Einbringen der Pflanzen oder der Stecklinge oder des Samens geschieht in der Weise, daß die oberste Schicht der Pflanzplatte in der Regel ein Naturfasergeflecht mit Schlitzen bzw. Löchern versehen ist, in die die Pflanzen, Stecklinge oder Samen einbringbar sind. Die Platte eignet sich zum Ziehen von Pflanzen aller Art, wie Zierpflanzen, Wasserpflanzen, Blumen und dergleichen und zeichnet sich darüber hinaus durch ihre Umweltfreundlichkeit aus, da das ganze Material verrottbar ist. Nach einem Zeitraum, in dem die Pflanze sich entwickelt hat und umgesetzt werden kann, kann der Rest der Platte wieder aufbereitet kompostiert werden. Dieser Kompost kann dann wieder verwendet werden.

Die Platte bietet eine Reihe von Vorteilen: Sie ist leicht zu transportieren. Dadurch, daß die Platte mit einem Faden versteppt ist, behält sie ihre Ursprungsform bei, ohne daß die Steppnähte einen negativen Einfluß auf das Wachstum der Pflanzen haben. Die Platte ist gut wiederbenetzbar, und sie hat eine gute Wasserführung, so daß keine Staunässe eintritt, die zu Wurzelkrankheiten führen könnte. Dadurch, daß die Platte versteppt ist, kann sie nach dem Herstellungsprozeß in handelsübliche Formen gegeben werden, zum Beispiel Pflanztischgröße in Gewächshäusern und darüber hinaus solchen Größen angepaßt werden, die sich leicht transportieren lassen. Als Naturfasergeflecht bieten sich alle Naturfasern an, insbesondere Jute, Kokos, Sisal, Flachs usw. Hieraus ergibt sich ein weiterer Vorteil, daß nämlich durch die Auswahl der Naturfaser, die ja bekanntlich alle verschiedene Verrottungszeiten haben, die Verrottungszeit der Platte dem Wachstum und der Verweilzeit der Pflanze angepaßt werden können.

Die Formgebung der Platte ist beliebig. Dementsprechend ist auch die Dicke der Schichten den jeweiligen Verhältnissen anpaßbar. Die Platte soll handelsüblichen Abmessungen entsprechen. Hierbei ist nicht nur an Pflanztische gedacht, sondern auch an die handelsüblichen Blumen- oder Balkonkästen. Wenn bisher die Rede davon war, daß die Platte aus einzelnen Schichten aufgebaut ist, so ist noch nichts darüber gesagt, ob und wie die beiden außenliegenden Schichten miteinander verbunden sind. Selbstverständlich läßt sich die Platte so ausbilden, daß ein sackähnliches Gebilde der äußeren Schicht hergestellt wird, das nunmehr mit dem Pflanzensubstrat und gegebenenfalls mit weiteren Naturfasern gefüllt ist und in den Maßen hergestellt wird, die handelsüblich sind.

Damit lassen sich auch Einsätze für Balkon- und Blumenkästen formen, so daß der Erwerber, der ein solches Formenstück erwirbt, dieses nur noch in seinen Blumenkasten einfügen muß. Hierbei ist auch daran gedacht, diese für Blumen- oder Balkonkästen vorgefertigten Platteneinsätze von vornherein mit Samen oder Pflanzen versehen im Handel anzubieten.

Besonders einfach ist die Herstellung solcher vorgeformten Teile, wenn die äußere Hülle der Platte aus einem Naturfasergeflecht besteht, das schlauchartig zusammengefügt ist. Dieser Schlauch wird jetzt mit Substrat und gegebenenfalls zusätzlich mit einer weiteren Pflanzenfaser gefüllt, hergestellt und dann in Strangabschnitte geschnitten, die den handelsüblichen Abmessungen entsprechen, also beispielsweise in der Länge von Balkon- oder Blumenkästen. Wird die schlauchförmige Platte als Einsatz in Blumenkästen und dergleichen benutzt, dann ist der Durchmesser des Schlauches vorgegeben. Ein solcher Schlauch kann aber auch mit kleinerem Durchmesser hergestellt werden und dient dann, in Strangabschnitte unterteilt, zur Aufnahme von Stecklingen, und Samen für den Zierpflanzen-, Gemüse-, Baumschul- und Weinbau. Auch hier wird der Durchmesser des Schlauches vom Einsatz abhängig sein ebenso wie die Teilstücke, in die der Schlauch geschnitten wird.

Die Frage des Transports von Blumenkästeneinsätzen oder Schlauchstücken läßt sich leicht bewältigen, wenn hierfür Papphüllen benutzt werden, die der äußeren Form des zu transportierenden Stückes angepaßt sind und die auch nach dem Transport als äußere zusätzliche Hülle im Blumenkasten verbleiben können. Diese Pappe hat ebenfalls die Eigenschaft, sich aufzulösen, so daß dadurch keine Entsorgungsprobleme entstehen können.

Pflanzplatten der bisher beschriebenen Art werden zwar vorzugsweise im Gartenbaubetrieb benutzt und liegen hier meist auf Pflanztischen auf, aber ihr Einsatz ist auch auf dem naturgewachsenen Erdboden denkbar. Soll so eine Platte auf dem Erdreich aufliegen, muß berücksichtigt werden, daß einmal kein Unkraut von unten durch die Platte wachsen darf und zum anderen aber auch die Wurzeln der in der Platte eingebrachten Pflanzen nicht in das Erdreich dringen sollen. Um dieses zu vermeiden, wird erfindungsgemäß die Platte, die zur Auflage auf das Erdreich kommt, mit einer lichtundurchlässigen Folie an der Unterseite verklebt. Diese Folie verhindert das Durchwachsen von Unkraut und sie verhindert das Durchwachsen der Wurzeln der in der Platte eingesetzten Pflanzen. Darüber hinaus besteht diese Folie aus biologisch abbaubaren Materialien. Selbstverständlich kann die Platte im Bedarfsfall auch ohne Folie eingesetzt werden, dann muß allerdings in Kauf genommen werden, daß die Wurzeln in das Erdreich eindringen, was unter Umständen gewollt sein kann.

Anhand von Zeichnungsbeispielen ist die Erfindung näher erläutert.
Die Figur 1 zeigt einen Aufbau der Platte mit drei Schichten,
die Figur 2 zeigt den Aufbau der Platte mit einer geschlossenen äußeren Naturfaserschicht,
die Figur 3 zeigt eine Platte im Vierschichtverfahren,
die Figur 4 zeigt eine Platte, die an ihren Rändern durch eine Naturfaser abgeschlossen ist,
die Figur 5 zeigt eine Platte wie sie für Balkon- oder Blumenkästen geeignet ist und
die Figur 6 zeigt die Platte in Schlauchform, z.B. als Anzuchttopf.

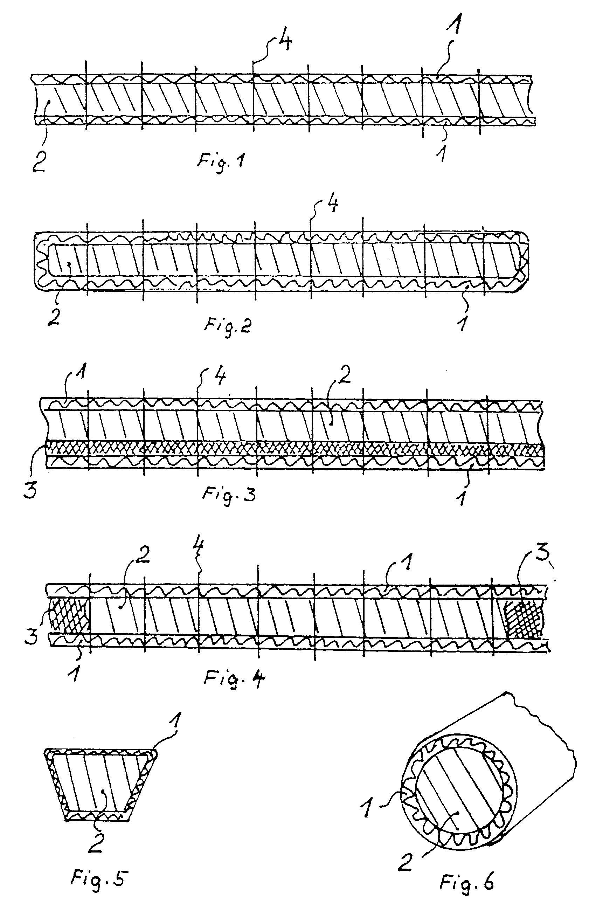

In Figur 1 ist die einfachste Art der Platte dargestellt. Sie besteht aus drei Schichten, wobei oben und unten je ein Naturfasergeflecht 1 angeordnet ist. Zwischen diesen beiden Schichten liegt das Pflanzensubstrat 2, und die Platte ist durch Nähte 4 fest miteinander verbunden.

In Figur 2 ist die äußere Ummantelung in Form eines Sackes dargestellt, das Naturfasergeflecht 1 ist ringsum geführt und in sich geschlossen, und dieses sackförmige Gebilde wird mit dem Substrat 2 gefüllt und dann wieder durch Nähte 4 miteinander verbunden.

In Figur 3 ist ein Vierschichtverfahren dargestellt. Auch hier ist die äußere Umhüllung wieder das Naturfasergeflecht 1. Zwischen den beiden Naturfasergeflechten ist jetzt eine Substratschicht 2 und eine Naturfaserschicht 3 eingebracht. Die Naturfasersicht 3 hat die Aufgabe, zusätzlich zur Pflanzensubstratschicht 2 die Wurzeln der Pflanzen aufzunehmen und empfiehlt sich damit in allen Fällen, wo eine dickere Pflanzschicht benötigt wird, das heißt die Platte also eine bestimmte Stärke übersteigt.

In Figur 4 ist eine Platte dargestellt, bei der wieder der obere und der untere Abschluß durch je ein Naturfasergeflecht 1 gebildet ist, zwischen denen ein Pflanzensubstrat 2 eingefügt ist, wobei die Seiten der Platte zusätzlich durch ein Naturfasergeflecht 3 abgeschlossen sind und somit einen zusätzlichen Verschluß gegen Herausfallen des Pflanzensubstrates darstellen.

Figur 5 zeigt schließlich im Querschnitt eine Form wie sie für Balkonkästen oder Blumenkästen geeignet ist. Auch hier ist eine äußere Ummantelung durch Naturfasergeflecht 1 vorgesehen, das wiederum mit dem Pflanzensubstrat 2 gefüllt ist.

Die Figur 6 zeigt ein Beispiel der schlauchförmigen Ausbildung. Der Schlauch selbst besteht aus dem Naturfasergeflecht 1 und wird mit Substrat 2 gefüllt und kann in beliebigen Längen hergestellt werden, um dann in entsprechende Teilstücke geschnitten dem jeweiligen Anwendungsfall angepaßt zu werden.

Selbstverständlich ist der Schlauch je nach Bedarfsfall in verschiedenen Durchmessern herstellbar.

Bisher sind Pflanzenplatten beschrieben worden, die entweder mit einer Naturfaserschicht allseitig umhüllt sind, oder die je eine Naturfaserschicht oben und unten besitzen. Gerade bei einer Platte mit allseitiger Umhüllung mit Naturfaser bietet sich an, an der Oberseite der Platte ein großes Stück der Naturfaser herauszuschneiden, so daß die Festigkeit der Platte nicht beeinträchtigt wird aber ihre Bestückung mit Samen, Stecklingen u.s.w. nicht mehr durch Schlitze oder Löcher hindurch erfolgen muß, sondern direkt vollzogen werden kann.

## Patentansprüche

1. Pflanzenträger zum Ziehen und Kultivieren von Pflanzen, Stecklingen und Samen, insbesondere auf Pflanztischen, im Gartenbau, in Balkon und Blumenkästen, gebildet aus einzelnen Schichten, von denen die äußere Schicht eine mit einem, für das Wachstum der Pflanzen geeignetem, Pflanzsubstrat gefüllte Hülle ist, und die mittlere Schicht aus Pflanzsubstrat besteht, ***dadurch gekennzeichnet***, daß der Träger aus mehreren Schichten (2;3) aufgebaut ist und daß die äußere Schicht eine aus Naturfasern bestehende, allseitig geschlossene Hülle (1) ist und daß die Schichten durch Fäden (4) mittels Kettelstich oder durch Vernadeln verbunden sind.

2. Planzenträger nach Anspruch 1, **dadurch gekennzeichnet**,
- daß der Träger schlauchförmig ausgebildet, an den Enden verschlossen ist.

3. Pflanzenträger nach Anspruch 2, **dadurch gekennzeichnet**,
- daß der mit Substrat gefüllte Schlauch quer zur Schlauchlänge in 2 Teilstücke geschnitten wird, so daß die offene Schnittfläche bepflanzbar ist.

4. Planzenträger nach Anspruch 2, **dadurch gekennzeichnet**,
- daß der Schlauch über die Länge zum Bepflanzen mit Schlitzen oder Löchern versehen ist.

5. Pflanzenträger nach Anspruch 1, **dadurch gekennzeichnet**,
- daß der Träger plattenförmig ausgebildet ist und daß die Länge, die Breite und die Stärke der Platte variierbar sind.

6. Pflanzenträger nach Anspruch 1 und 5, **dadurch gekennzeichnet**,
- daß der Träger aus mehreren Schichten besteht, von denen die untere und die obere Schicht Naturfasergeflecht sind,
- daß zwischen diesen Schichten je eine Schicht Naturfaser - vorzugsweise Kokos - und eine Schicht Pflanzensubstrat angeordnet sind und
- daß die Platte durch Steppnähte zusammengefügt ist.

7. Pflanzenträger nach Anspruch 1 und einem der folgenden, **dadurch gekennzeichnet**,
- daß der Träger kastenförmig aufgebaut und den Maßen handelsüblicher Blumenkästen angepaßt ist.

8. Pflanzenträger nach Anspruch 1 und 7, **dadurch gekennzeichnet**,
- daß der kastenförmige Träger in Pappträgern, die auf das handelsübliche Format von Balkonkästen gebracht sind, verpackt ist.

9. Pflanzenträger nach Anspruch 1 - 8, **dadurch gekennzeichnet**,
- daß die Unterseite des Trägers mit einer oder mehreren undurchsichtigen Folien verklebt oder verschweißt oder vernäht ist.

## Claims

1. Plant support for raising and cultivating plants, nursery plants and seeds, in particular on planting tables, in horticulture, in balcony and window flower boxes, which is formed of individual layers including an outside layer which is a cover filled with a planting substrate appropriate to promote the plant growth, and an intermediate planting substrate layer, *characterized in* that the plant support is composed of several layers (2; 3), and that said outside layer is an envelope (1) closed on all sides and consisting of natural fibers, and that said layers are interconnected by threads (4) by means of chain-stitching or needling.

2. Plant support according to Claim 1, **characterized in**
- that the support presents the form of a tube having closed ends.

3. Plant support according to Claim 2, **characterized in** that said tube filled with substrate is cut into two sections transversely with respect to the length of the tube such that the exposed cut surface may be planted.

4. Plant support according to Claim 2, **characterized in**
- that said tube is provided over its length with slits or holes for planting.

5. Plant support according to Claim 1, **characterized in**
- that the support presents a plate-shaped configuration, and that the length, the width and the thickness of the plate may be varied.

6. Plant support according to Claims 1 and 5, **characterized in**
- that the support consists of several layers including a bottom and a top layer made of a fabric braided of natural fibers,
- that one layer of natural fibers, preferably coir, and one layer of plant substrate are disposed between these layers, and
- that said plate is joined by quilting seams.

7. Plant support according to Claim 1 and one of the following Claims, **characterized in**
- that the support has a box-shaped structure and is matched with the dimensions of commercially available flower boxes.

8. Plant support according to Claims 1 and 7, **characterized in**
- that said box-shaped support is packed into cardboard containers whose dimensions are matched with the format of balcony flower boxes.

9. Plant support according to Claims 1 to 8, **characterized in**
- that the underside of the support is fastened on one or several nontransparent films by bonding or welding or sewing.

## Revendications

1. Porteur de plantes pour la culture de plantes, des boutures et des graines, en particulier sur des tables de culture, en horticulture, dans des jardinières pour des rebords de fenêtre et des balcons, qui est formé par des couches individuelles qui comprennent une couche extérieure qui forme une gaine remplie d'un substrat de culture favorable à la croissance des plantes, et une couche intermédire à substrat de culture, *caractérisé en ce* que ledit porteur de plantes consiste en plusieurs couches (2; 3), et en ce que ladite couche extérieure est une gaine (1) fermée partout et composée de fibres naturelles, et en ce que lesdites couches sont reliées l'une à l'autre par des fils (4) moyennant une technique à points de chaînette ou d'aiguillage.

2. Porteur de plantes selon la revendication 1, **caractérisé en ce**
- que le porteur a la forme d'une gaine à extrémités fermées.

3. Porteur de plantes selon la revendication 2, **caractérisé en ce** que ladite gaine remplie de substrat est coupée dans deux segments, transversalement à la longueur de la gaine, de façon que la tranche peut être plantée.

4. Porteur de plantes selon la revendication 2, **caractérisé en ce**
- que ladite gaine est prévue, sur toute sa longueur, de fentes ou trous de plantation.

5. Porteur de plantes selon la revendication 1, **caractérisé en ce**
- que le support a une configuration sous forme d'une plaque, et en ce que la longueur, la largeur et l'épaisseur de la plaque sont variables.

6. Porteur de plantes selon les revendications 1 et 5, **caractérisé en ce**
- que le support est formé par plusieurs couches, à l'inclusion d'une couche inférieure et d'une couche supérieure constituées par un entrelacement tressé en fibres naturelles,
- en ce qu'une couche en fibres naturelles, de préférence en coir, et une couche en substrat de culture sont disposées entre ces couches, et
- en ce que ladite plaque est assemblée par des coutures piquées.

7. Porteur de plantes selon la revendication 1 et une quelconque des revendications suivantes, **caractérisé en ce**
- que le support a une structure sous forme d'un coffre, en étant adapté aux dimensions des jardinières habituelles commercialisées.

8. Porteur de plantes selon les revendications 1 et 7, **caractérisé en ce**
- que ledit support sous forme d'un coffre est emballé dans des conteneurs en carton dont les dimensions sont adaptées au format des jardinières pour le balcon.

9. Porteur de plantes selon les revendications 1 à 8, **caractérisé en ce**
- que le dessous du support est collé ou soudé ou cousu sur un ou plusieurs films opaques.
